# EUROPEAN PATENT SPECIFICATION

(11) **EP 1 283 635 B1**
(45) Date of publication and mention of the grant of the patent: **15.02.2006**
(21) Application number: 01830535.9
(22) Date of filing: 10.08.2001
(51) Int. Cl.: H04M 3/51, H04M 3/523

(54) **Method and apparatus for decentralizing operator stations of telephone exchanges and for remote handling of telephone calls directed to a local exchange**
Verfahren und System zur Dezentralisierung der Vermittlungsplätze einer Fernsprechvermittlungsanlage und zur ferngesteuerten Bearbeitung von zu einer Ortvermittlungsstelle adressierten Anrufen
Procédé et appareil pour la décentralisation des postes d'operateurs des centraux téléphoniques et pour la gestion à distance des appels destinés à un central local

(43) Date of publication of application: 12.02.2003
(73) Proprietor: Phonetica S.R.L., 20095 Cusano Milanino (prov. of Milano) (IT)
(72) Inventor: Durante, Marco, 20020 Arese (Prov. of Milano) (IT)
(74) Representative: Modiano, Micaela Nadia

(56) References cited:
- EP-A- 0 753 956
- EP-A- 0 766 445
- EP-A- 0 802 665
- WO-A-00/49794
- WO-A-00/70849
- WO-A-96/31044
- WO-A-99/17518
- BASSO R.J. ET AL: 'OSPS SYSTEM ARCHITECTURE' AT T TECHNICAL JOURNAL, AMERICAN TELEPHONE AND TELEGRAPH CO. vol. 68, no. 6, 01 November 1998, NEW YORK, pages 9 - 24, XP000116874

## Description

The present invention relates to a method and a device for remote handling of telephone calls toward a private branch exchange. The illustrated method and device allow to perform remotely all normal activities usually performed by an ordinary operator station of a local telephone exchange.

Several years ago it became indispensable to provide every office and every medium and large businesses with telephone exchanges capable of handling and routing the incoming calls. Virtually every office and every company of the non-individual type in fact has an internal telephone network, to which several telephone sets, arranged in the various rooms of the office building, are connected. Each of these sets is associated with a number, which usually has three digits, is known as "extension" and identifies the individual telephone set. Calls received by the company or office are handled by an operator, who is located at the exchange operator station and has the task of answering incoming calls, talking to the caller and, if necessary, routing the call to the required extension.

Typically, the exchange that receives every call directed to the number of the business is a PABX (Private Automatic Branch Exchange) device, to which a telephone used by the exchange operator is connected. When a call arrives, the operator lifts the receiver and talks to the caller; once he has determined whom the caller wishes to speak with, the exchange operator dials the digits that correspond to the required extension, optionally preceded or followed by the pressing of control keys, and disengages his line as soon as the recipient of the call is reached, routing the call onto the corresponding extension line.

Over time, and as many businesses become oriented toward financial and commercial methods aimed at higher organizational efficiency and cost reduction, it has been observed that the above-described telephone handling method is no longer able to fully meet businesses requirements.

This method in fact has considerable drawbacks. In particular, every exchange operator station requires the presence of an operator who operates a telephone set that is directly connected to the telephone exchange, thus forcing the business to reserve space in its offices for handling incoming calls.

Secondly, answering each call requires the physical presence of the operator; therefore the possibility to receive calls is often restricted only to office opening hours.

Finally but equally importantly, since the exchange is located inside the office, it is inconvenient or even embarrassing to use a single exchange operator station if it is necessary to manage a plurality of businesses or offices from a single station.

A partial answer to the above problems can be found in networks of telephone exchanges (generally constituted by systems manufactured by the same manufacturer), which can concentrate on a single system of the network the operator station by means of connections using dedicated lines between the exchanges of the network or connected over the public switched telephone network in VPN (Virtual Private Network) mode; in this last case, the networked systems use digital connections over ISDN lines or over the Internet, sending the received signals from a first dedicated device to a second dedicated device. However, this solution has evident limitations, since it requires the installation of two devices which are capable of communicating with each other both where the data of the external call are received and at the final destination of the data, thus allowing to route the call only toward numbers where an appropriate device, not a conventional telephone set, is operating. Moreover, use of the system is constrained to the use of dedicated circuits or digital networks in the case of connections over VPNs.

EP0802665 describes that a switch may be adapted to provide Automatic Call Distributor (ACD) services from remote agent stations as well as local agent stations. When a call is received at a call center, a selection is made to assign the call to a local or a remote agent.

WO96/31044 illustrates teleworking arrangements through which remote agents may request or be offered work and are selected to answer a call according to a set of rules.

The aim of the present invention is to overcome the above-described current limitations, providing a method and a device that allow to perform, from any remote station, all the functions normally performed by the local exchange operator of an office or business.

Within this aim, an object of the present invention is to be able to answer from a remote location, in a manner which is fully user-transparent, a call directed to the business exchange, greet the caller as the local business operator would, put on hold, retrieve and transfer the incoming call.

Another object of the present invention is to allow the handling of a plurality of telephone exchanges, even belonging to different businesses and not being part of the same group, from a single remote station.

This aim is achieved by a method an apparatus as defined in the independent claims. Further details are defined in the dependent claims.

This aim and these and other objects which will become better apparent hereinafter are achieved by an apparatus for decentralizing telephone exchange operations, comprising means for receiving a telephone call received on a first line, means for engaging a second line, means for connecting the first and second lines, means for dialing on the second line a preset number which corresponds to a remote telephone set, means for waiting for the call answer signal on the second line on the part of the remote telephone set, means for performing, once the connection has been made, remote-controlled operations transmitted on the second line by the remote set, including dialing the number of a requested extension, and for disengaging said device if the call is accepted at said extension.

Advantageously, the apparatus can be voiceband-controlled according to proprietary protocols and comprises means, substantially constituted by software devices which are appropriately programmed to drive conventional hardware means, in order to put on hold the caller, park the call, dial a telephone number, access external telephone lines, retrieve a call put on hold or parked, clear the first and/or second telephone lines, which can be analog and/or digital land and/or wireless lines.

In particular, the apparatus can be associated with any exchange from which a telephone line exits in order to connect said line to a second telephone line directed outward, regardless of the devices used, thus overcoming the limitations already described in the use of dedicated networks of telephone exchanges or in a connection of the VPN type.

Further characteristics and advantages of the present invention will become better apparent from the following detailed description, given by way of non-limitative example and illustrated in the accompanying figures, wherein:
Figure 1 is a schematic view of the architecture of a telephone system operating according to the present invention;
Figure 2 is a block diagram of a device according to the present invention.

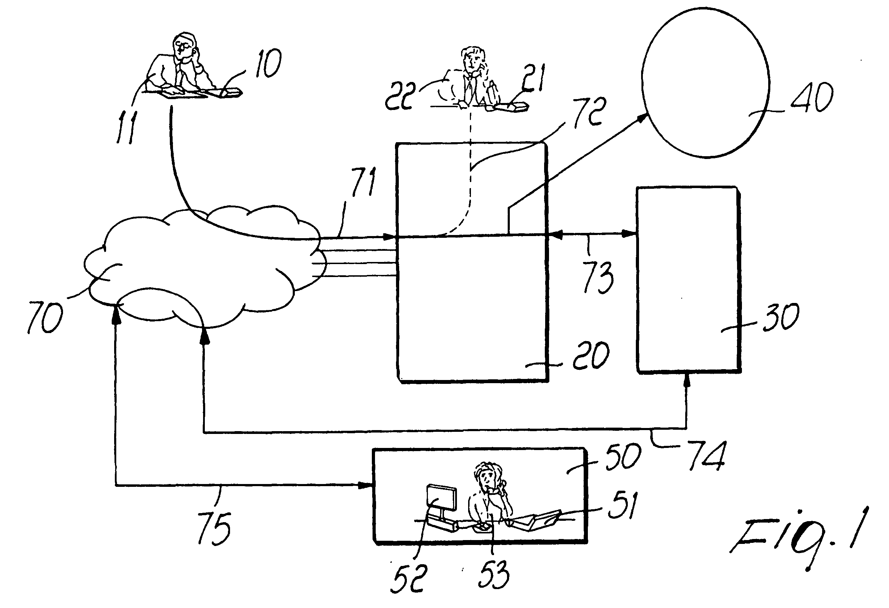

With reference to Figure 1, the architecture of the complete system uses a telephone network 70, for example a classic PSTN (public switched telephone network) provided by an authorized telephone carrier, external lines 71 in input to a local exchange 20 located at, or corresponding to, an office or business, a set of lines 72 that are internal to the business and are used to connect in a conventional manner the exchange 20 to extension telephones 40, each of which corresponds to a given extension, a line 73 that connects the exchange 20, for example of the PABX type, to the device 30 according to the present invention, an external line 74 that connects the device 30 to the telephone network 70, a line 75 that connects the telephone network 70 to a remote location 50, hereinafter generically designated as "call center" and presided by one or more operators 53, whereat a device 51 capable of communicating with the device 30, and an apparatus 52, optionally integrated in the device 51, which is capable of displaying detailed information regarding the call in progress, are installed. Figure 1 also illustrates a caller 11 who is working on a telephone set 10 and an exchange operator 22 who operates in a conventional manner on an optional telephone set 21.

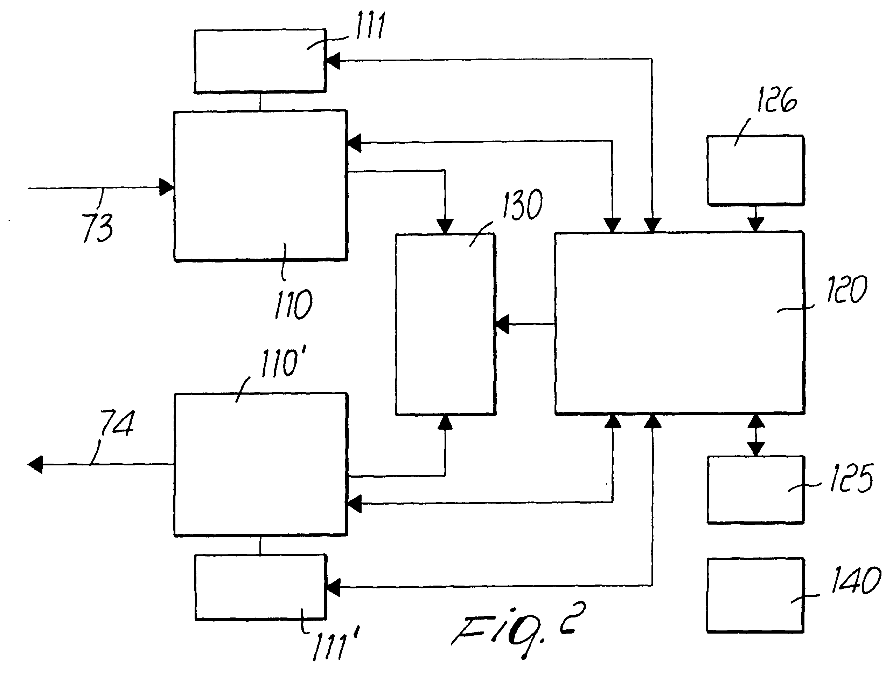

The device 30 is shown schematically in greater detail in Figure 2. In particular, Figure 2 illustrates the telephone connection line 73 originating from the exchange 20, the external line 74 directed to the telephone network 70 and to the call center 50, telephone interfaces 110 and 110' for handling the signals carried over the telephone lines 73 and 74 and coupled to audio processors 111 and 111', the CPU (central processing unit) of a control unit 120 connected to an EEPROM memory 125 for retaining data and to a voltage supervisor unit 126 which can be used to reset the device, an active switching matrix 130 and a power supply for all the functions of the apparatus, which operates preferably with +5V DC switching.

The telephone interfaces comprise all the conventional devices required for the handling of incoming and outgoing calls, including protections, ring sensors, line current sensors, line-busy relays, rectifier bridges, active current stabilizers, audio decouplers, isolation transformers, active balanced interfaces. The audio processors also comprise conventional means, for example means for detecting 425-Hz tones and DTMF tone generators. The above-described means perform their known functions and therefore are not described in detail.

The CPU executes software code capable of driving the above-cited actuators and sensors that are present in the device. It is therefore capable of decoding tones and of detecting their cadences on the connected lines, of decoding and generating DTMF digits, detecting call rings and the presence of current on the lines, and activating and reading the state of the busy relays of the telephone lines.

The operation of the system is as follows. A caller 11 dials, from his telephone set 10, the telephone number of the recipient, thus engaging an external line 71 connected to the exchange 20. The call is handled, over the line 73, by the device 30, which checks the availability of the line 74 and connects it in a conventional manner, for example on the voice band or in the manner used to perform call rerouting, to the line 73. From the line 74 for connection to the telephone network 70, the call is routed to the call center 50 over the line 75, where it is received by the device 51. The means 52 further provide information on the call to the operator 53, as described hereinafter.

The operator 53, located at the call center 50, answers the call, talks to the caller 10, makes a call to the requested extension number within the user group 40 (by using the line 73 again), and routes the call to the requested extension of the group 40; as soon as the call has been routed, the device 30 releases the line 73 and is capable of receiving another call directed to the exchange 20.

Meanwhile, the operator 53, who is located at the call center 50 and operates remotely, can perform all the operations normally reserved to the local exchange operator 22, sending commands to the device 30 from his telephone station.

All calls directed to the exchange 20 and incoming on the line 71 are then routed on the line 73 to the device 30, which deals with their handling. However, if the device 30 is deactivated by the exchange 20, the call is routed onto the line 72, which leads directly to an optional extension telephone 21, thus also allowing the exchange to operate in the conventional manner.

In greater detail, the device 30 detects the ring of an incoming call by means of the ring sensor, engages the line 74 after a programmable number of rings, typically one, and calls a preset number which corresponds to the call center 50 where the remote operator 53 is present.

If the line 74-75 is busy, the device 30 waits for it to become free. Moreover, if the line is busy, an optional telephone set 21 can be connected to the exchange 20. In this case, that set will continue to ring until the caller 11 hangs up or until the call is answered locally in person or by means of another device, such as an answering machine or a responder which warns that the call cannot be handled temporarily.

As soon as the line 74-75 is free, instead, the call procedure begins and the local telephone 21, if present, is disconnected and stops ringing.

The remote operator 53 answers the call, recognizes that the call originates from the device 30 by way of adapted warning tones, and enters a preset "answer outside caller" DTMF code. Moreover, the device 30 can send, in the form of appropriate trains of pulses that conform to a communications protocol, additional information related to the call in progress. For example, it can send information that identifies the device 30, so that the answering device used by the operator 53 is capable of identifying the exchange for which the call made by the caller 11 is intended. In this manner, it is possible to connect a plurality of exchanges 20, each through its own device 30, to a same call center 50, allowing a single operator 53 who operates remotely to handle a plurality of offices or businesses from a single station. The information related to the exchange being called can be displayed on the display means 52 or can be reported by means of different tones on the telephone set 51, allowing the operator 53 to greet the caller in the appropriate manner.

Once the operator 53 has entered the code that corresponds to call acceptance, the device 30, after recognizing the code, answers on the line 73 and provides the audio connection between the line 71-73 of the caller and the line 74-75 of the remote operator.

The remote operator 53, after greeting the caller 11 as if he were at the business premises, can perform all normal exchange operations, for example transfer the call to an extension 40 connected to the business telephone exchange. In order to do so, he enters another preset "put on hold" DTMF code.

The device 30 recognizes on the line 74 the code entered by the remote operator 53 and puts on hold the caller on the line 73 and proposes the exchange dial tone to the remote operator 53.

At the same time, the user 11 who is calling on the line 71-73 listens to the audio signal or hold tone generated by the exchange 20. The criteria for putting on hold, flash, flash duration, numbering after flash and pause before numbering after flash are programmable, as described hereinafter.

The remote operator 53 then dials the number of the requested extension 40, talks to the extension requested by the caller and, if the call is accepted, enters a preset "connect and clear" DTMF tone.

The device 30 recognizes this code on the line 74 and disengages itself from the call by clearing itself. The caller 11 is now connected to the person he wished to contact.

If the attempt to contact the requested extension 40 fails, for example because the extension is busy or the recipient is not present or does not wish to take the call, the remote operator 53 can retrieve the caller who is on hold on the line 73. To do this, he enters a preset "retrieve from hold" DTMF code. The device 30 recognizes this command on the line 74 and retrieves the held call. The criteria for retrieval from hold, flash, flash duration, numbering after flash and pause before numbering after flash are also programmable.

At this point, the caller 11 again speaks with the remote operator 53 and can decide which action to take, such as calling again, trying the same extension or requesting another extension.

All of the above-described operations are protected by a preset general timeout, at the end of which the device 30 returns to the standby mode, clearing all connections on the two lines 73 and 74. This timeout is triggered and reset at each operation performed by the remote operator 53 and is substantially provided for security reasons. Even if the remote operator 53 performs incorrect actions, such as an unintentional dropping of a line or lines without generating their respective clearing tones, the timeout ensures that the device 30 is capable of returning to standby conditions, ready to handle other calls.

If the remote operator 53 has to talk for a long time to the caller 11, the remote operator is notified by tones generated by the above-cited tone generator, driven by the remote device 30, that the timeout is about to expire. To avoid closure of the call, the remote operator 53 must then enter the take-call code, as a consequence of which the device 30 resets the timeout.

The device 30 is further capable of recognizing the signals for clearing the line 73 and, if said signals are detected, it returns to the standby mode, ready to handle other calls.

It is also possible to disable and re-enable the operation of the device 30 by means of a command given over the telephone, for example a DTMF command detected by the DTMF tone detector, to be sent by the set 51 connected to the line 74. When disabled, the device 30 is completely transparent to what occurs on the lines and takes no action, leaving call handling to the exchange 20.

For example, in order to disable the device 30 it is sufficient to pick up a telephone associated with the line 74 and enter on the keypad a preprogrammed disabled code, such as "***###***". The same applies to re-enabling the device by entering a different preprogrammed code.

The device 30 can be programmed in different manners, for example by means of a remote telephone set using DTMF or by means of a connection over a serial interface from a personal computer.

If the first method is used, programming occurs preferably by connecting from the line 74. After a programmable number of rings, the device 30 answers the call on the line and the programming protocol is set up.

Table 1 illustrates fields that can be programmed according to a preferred embodiment of the device 30, given by way of non-limitative example. A description of the meaning of the fields of Table 1 is provided in Table 2.

**Table 1**

| Field number and confirmation code | Field name and parameter | Possible values | Factory-set value | Maximum length of field, number of digits |
|---|---|---|---|---|
| 0 # | Line A activation rings | 1-9 | 2 | 1 |
| 1 # | Reorder tone (msec) mask - max | 0-9999 | 600 | 4 |
| 2# | Reorder tone (msec) mask - min | 0-9999 | 80 | 4 |
| 3# | Reorder pause (msec) mask - max | 0-9999 | 600 | 4 |
| 4# | Reorder pause (msec) mask - min | 0-9999 | 80 | 4 |
| 5# | Reorder tone count | 1-99 | 15 | 2 |
| 6 # | Put-on-hold (msec) flash | 0-9999 | 100 | 4 |
| 7 # | Retrieve- (msec) from-hold flash | 0-9999 | 100 | 4 |
| 8 # | Hold service digits | Blank-999 | Blank | 3 |
| 9 # | Retrieve service digits | Blank-999 | Blank | 3 |
| 10 # | Remote answer code | 0,1...9, #,* | #1 | 3 |
| 11 # | Remote parking code | 0,1...9, #,* | #2 | 3 |
| 12 # | Remote clear code | 0,1...9, #, * | #3 | 3 |
| 13 # | New programming password | 0-999999 | 2222 | 6 |
| 15 # | Operating (sec) timeout | 0-9999 | 120 | 4 |
| 16 # | Dialing wait (msec) after flash | 0-9999 | 2000 | 4 |
| 17 # | DTMF digit (msec) duration | 0-9999 | 100 | 4 |
| 18 # | DTMF pause (msec) duration | 0-9999 | 100 | 4 |
| 19 # | Line B programming rings | 0-99 | 5 | 2 |
| 21 # | System flash (msec) coverage | 0-9999 | 300 | 4 |
| 28 # | Remote operator number | 0,1...9 | Blank | 20 |
| | | *=1 sec pause | | |

**Table 2**

| | |
|---|---|
| Line A activation rings | Number of received rings after which the device 30 dials the number of the call center 50 |
| Reorder tone mask - max | Upper and lower limits of clearing tone for the lines to which the device 30 is connected. Tone presence and absence can be defined. It is also necessary to indicate how many consecutive valid tones are to be considered as a tone recognized as valid. |
| Reorder tone mask - min | |
| Reorder pause mask - max | |
| Reorder pause mask - min | |
| Reorder tone count | |
| Put-on-hold flash | Duration of the flashing criterion for putting on hold and retrieving, if different. It is possible to indicate any parking or retrieval digits as an alternative, or as an addition, to the flash criterion. |
| Retrieve-from-hold flash | |
| Hold service digits | |
| Retrieve service digits | |
| Remote answer code | Codes of commands available to remote operator. |
| Remote parking code | |
| Remote clear code | |
| New programming password | Indicate the password to be programmed into the device. |
| Operating timeout | Maximum usage time for each individual call handled by the device 30 while it is connected to the remote operator. |
| Dialing wait after flash | Time wait for dialing digits after executing the put-on-hold criterion. |
| DTMF digit duration DTMF pause duration | Duration of DTMF dialing tones emitted by the device 30. |
| | |
| Line B programming rings | Number of received rings after which the device 30 answers the call and enters the mode for programming over a telephone line. |
| System flash coverage | Coverage time of flash criterion that the sets connected to the line 73 and 74 must perform in order to be put on hold during their calls. |
| Remote operator number | Telephone number of call center 50. |

It has thus been shown that the present device achieves the intended aim and objects. In particular, a device has been illustrated which is capable of remotely providing all the functions traditionally reserved to a local exchange and can be controlled from any conventional telephone set, for example an analog or digital touch-tone set. Obviously, numerous modifications are evident and can be promptly introduced by the person skilled in the art without abandoning the scope of the protection of the present invention. For example, it is evident that the type of lines that can be connected is not limited to analog lines, since it is obvious for the person skilled in the art to provide a device which, while remaining within the scope of the same inventive concept, operates on digital lines, for example ISDN lines, mobile telephone lines, for example cellular telephones, and data communications lines in general, such as ADSL or fiber-optic networks.

The protective scope of the claims therefore must not be limited by the illustrations or by the preferred embodiments presented in the description by way of example; rather, the claims must comprise all the patentable novelty characteristics that can be deduced from the present invention, including all the characteristics that would be treated as equivalent by the person skilled in the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for remote management of the operator station of a local telephone exchange (20), by means of a local device (30), connectable to a conventional exchange (20), comprising the steps of:
- by said local exchange (20), receiving a telephone call from a caller (11);
- by said local exchange (20), transferring said telephone call to a first line (73), said first line (73) being a conventional local telephone line;
by said local device (30), connectable to said first line (73), answering said telephone call received on said first line (73);
- by said local device (30), engaging a second line (74), said second line (74) being an external conventional telephone line;
- by said local device (30), connecting said first and second lines (73, 74);
- by said local device (30), dialing on said second line (74) a preset number of a remote operator (53);
- by said local device (30), waiting for the call answer signal on said second line (74) on the part of an answering unit (51, 52);
- by said answering unit (51, 52), once the connection has been made, engaging in a voice call with the caller (11) and, at the same time, commanding remote-controlled operations, transmitted over said second line (74) to the local exchange (20) through said local device (30), so as said remote controlled operations are performed by said local exchange (20) as if they were commanded by a local operator, said remote-controlled operations including making a call to a requested extension (40), routing said caller's telephone call to the requested extension (40) and disengaging said local device (30) if the caller's call is accepted at said extension (40).

2. The method according to claim 1, **characterized in that** said remote-controlled operations are transmitted by means of proprietary protocols on the voice band.

3. The method according to claim 1, **characterized in that** said remote-controlled operations are selected from the group comprising:
- putting the caller on hold;
- parking the call;
- dialing a number;
- accessing external telephone lines;
- retrieving a call that is on hold or parked;
- clearing said first and/or second telephone lines.

4. The method according to one of the preceding claims, **characterized in that** said first and second telephone lines are of the analog or digital type.

5. The method according to claim 4, **characterized in that** said first and second telephone lines are land lines or wireless lines.

6. An apparatus (30) for decentralizing telephone exchange operations, the apparatus (30) being connectable to a conventional local telephone exchange (20), comprising:
- means for receiving a caller's telephone call on a first telephone line (73) connecting the apparatus to the local telephone exchange (20) to which the telephone call is directed;
- means for engaging a second telephone line (74);
- means for connecting said first (73) and second (74) telephone lines;
- means for dialing a preset number on said second telephone line (74);
- means for waiting for the call answer signal on said second telephone line (74) on the part of an answering unit (51, 52);
- means (120, 130) for performing, once the connection has been made, remote-controlled operations transmitted over said second telephone line (74) by said answering set, including making a call to a requested extension (40), routing said caller's call to the requested extension (40) and means for disengaging the apparatus (30) if the caller's call is accepted at said extension (40).

7. The apparatus according to claim 6, **characterized in that** said means for performing remote-controlled operations are voiceband controlled according to proprietary protocols.

8. The apparatus according to claim 7, **characterized in that** said means for performing remote-controlled operations comprise means for:
- putting the caller on hold;
- parking the call;
- dialing a telephone number;
- accessing external telephone lines;
- retrieving a call put on hold or parked;
- clearing said first and/or second telephone lines.

9. The apparatus according to one of the preceding claims, **characterized in that** said first and second telephone lines are of the analog or digital type.

10. The apparatus according to claim 9, **characterized in that** said first and second telephone lines are land lines or wireless lines.

## Patentansprüche

1. Verfahren zur Fernverwaltung des Vermittlungsplatzes einer lokalen Vermittlungsstelle (20) mittels einer lokalen Vorrichtung (30), die mit einer herkömmlichen Vermittlungsstelle (20) verbunden werden kann, umfassend die folgenden Schritte:
- Empfangen eines Telefonanrufs von einem Anrufer (11) durch die lokale Vermittlungsstelle (20);
- Weiterleiten des Telefonanrufs an eine erste Leitung (73) durch die lokale Vermittlungsstelle (20), wobei diese erste Leitung (73) eine herkömmliche lokale Telefonleitung ist;
- Entgegennahme des über die erste Leitung (73) empfangenen Anrufs durch die lokale Vorrichtung (30), die mit der ersten Leitung (73) verbunden werden kann;
- Belegen einer zweiten Leitung (74) durch die lokale Vorrichtung (30), wobei die zweite Leitung (74) eine externe herkömmliche Telefonleitung ist;
- Verbinden der ersten und der zweiten Leitung (73, 74) durch die lokale Vorrichtung (30);
- Wählen einer voreingestellten Nummer einer entfernten Bedienperson (53) über die zweite Leitung (74) durch die lokale Vorrichtung (30);
- Warten auf das Anrufbeantwortungssignal auf der zweiten Leitung (74) seitens einer Beantwortungseinheit (51, 52) durch die lokale Vorrichtung (30);
- Aufnahme eines Sprachanrufs mit dem Anrufer (11) durch die Beantwortungseinheit (51, 52), sobald die Verbindung hergestellt ist, und gleichzeitige Anweisungserteilung für ferngesteuerte Vorgänge, die über die zweite Leitung (74) durch die lokale Vorrichtung (30) zur lokalen Vermittlungsstelle (20) übermittelt werden, damit die ferngesteuerten Vorgänge von der lokalen Vermittlungsstelle (20) so ausgeführt werden, als wären sie von einem lokalen Bediener veranlasst worden, wobei die ferngesteuerten Vorgänge Folgendes umfassen: Anruf bei einer gewünschten Durchwahl (40), Weiterleitung des Telefonanrufs des Anrufers zur gewünschten Durchwahl (40) und Auskoppelung der lokalen Vorrichtung (30), wenn der Anruf des Anrufers von der Durchwahl (40) angenommen wurde.

2. Verfahren nach Anspruch 1, **dadurch gekennzeichnet, dass** die ferngesteuerten Vorgänge mittels proprietärer Protokolle auf dem Sprachband übermittelt werden.

3. Verfahren nach Anspruch 1, **dadurch gekennzeichnet, dass** die ferngesteuerten Vorgänge aus der Gruppe ausgewählt werden, die Folgendes umfasst:
- die Verbindung des Anrufers halten;
- den Anruf parken;
- eine Nummer wählen;
- Zugriff auf externe Telefonleitungen;
- Wiederaufnahme eines gehaltenen oder geparkten Anrufs;
- Freigabe der ersten und/oder zweiten Telefonleitung.

4. Verfahren nach einem der vorhergehenden Ansprüche, **dadurch gekennzeichnet, dass** die erste und zweite Telefonleitung analoger oder digitaler Art sind.

5. Verfahren nach Anspruch 4, **dadurch gekennzeichnet, dass** die erste und zweite Telefonleitung Überlandleitungen oder drahtlose Leitungen sind.

6. Vorrichtung (30) zur Dezentralisierung von Telefonvermittlungsvorgängen, wobei die Vorrichtung (30) mit einer herkömmlichen lokalen Vermittlungsstelle (20) verbunden werden kann, umfassend:
- Mittel zum Empfangen eines Telefonanrufs von einem Anrufer auf einer ersten Telefonleitung (73), wobei die Vorrichtung mit der lokalen Vermittlungsstelle (20) verbunden wird, an die der Telefonanruf gerichtet ist;
- Mittel zum Belegen einer zweiten Telefonleitung (74);
- Mittel zum Verbinden der ersten (73) und zweiten (74) Telefonleitung;
- Mittel zum Wählen einer voreingestellten Nummer auf der zweiten Telefonleitung (74);
- Mittel zum Warten auf das Anrufbeantwortungssignal auf der zweiten Telefonleitung (74) seitens einer Beantwortungseinheit (51, 52);
- Mittel (120, 130) zur Durchführung von über die zweite Telefonleitung (74) übermittelten ferngesteuerten Vorgängen, nach Herstellung der Verbindung, mittels des Beantwortungsgeräts, einschließlich eines Anrufs bei einer gewünschten Durchwahl (40), der Weiterleitung des Anrufs des Anrufers an die gewünschte Durchwahl (40) und der Mittel zur Auskoppelung der Vorrichtung (30), wenn der Anruf des Anrufers von der Durchwahl (40) angenommen wurde.

7. Vorrichtung nach Anspruch 6, **dadurch gekennzeichnet, dass** die Mittel zur Durchführung ferngesteuerter Vorgänge entsprechend proprietärer Protokolle durch ein Sprachband gesteuert sind.

8. Vorrichtung nach Anspruch 7, **dadurch gekennzeichnet, dass** die Mittel zur Durchführung ferngesteuerter Vorgänge folgende Mittel umfassen:
- die Verbindung des Anrufers halten;
- den Anruf parken;
- eine Telefonnummer wählen;
- Zugriff auf externe Telefonleitungen;
- Wiederaufnahme eines gehaltenen oder geparkten Anrufs;
- Freigabe der ersten und/oder zweiten Telefonleitung.

9. Vorrichtung nach einem der vorhergehenden Ansprüche, **dadurch gekennzeichnet, dass** die erste und zweite Telefonleitung analoger oder digitaler Art sind.

10. Vorrichtung nach Anspruch 9, **dadurch gekennzeichnet, dass** die erste und zweite Telefonleitung Überlandleitungen oder drahtlose Leitungen sind.

## Revendications

1. Procédé pour la gestion à distance du poste opérateur d'un autocommutateur de téléphone local (20), à l'aide d'un dispositif local (30), pouvant être connecté à un autocommutateur classique (20), comprenant les étapes consistant à :
- à l'aide dudit autocommutateur local (20), recevoir un appel téléphonique venant d'une personne appelante (11) ;
- à l'aide dudit autocommutateur local (20), transférer ledit appel téléphonique à une première ligne (73), ladite première ligne (73) étant une ligne téléphonique locale classique ;
- à l'aide dudit dispositif local (30), pouvant être connecté à ladite première ligne (73), répondre audit appel téléphonique reçu sur ladite première ligne (73) ;
- à l'aide dudit dispositif local (30), engager une deuxième ligne (74), ladite deuxième ligne (74) étant une ligne téléphonique classique extérieure ;
- à l'aide dudit dispositif local (30), connecter lesdites première et deuxième lignes (73, 74) ;
- à l'aide dudit dispositif local (30), numéroter sur ladite deuxième ligne. (74) un numéro pré-établi d'un opérateur à distance (53) ;
- à l'aide dudit dispositif local (30), attendre le signal de réponse d'appel sur ladite deuxième ligne (74) de la part d'une unité de réponse (51, 52) ;
- à l'aide de ladite unité de réponse (51, 52), une fois que la connexion a été établie, s'engager dans un appel local avec la personne appelante (11), et, en même temps, commander des opérations commandées à distance, transmises sur ladite deuxième ligne (74) à l'autocommutateur local (20) par l'intermédiaire dudit dispositif local (30), de telle sorte que lesdites opérations commandées à distance soient effectuées par ledit autocommutateur local (20) comme si elles étaient commandées par un opérateur local, lesdites opérations commandées à distance comprenant la réalisation d'un appel vers un poste voulu (40), l'acheminement dudit appel téléphonique de la personne appelante vers le poste voulu (40) et le désengagement dudit dispositif local (30) si l'appel de la personne appelante est accepté sur ledit poste (40).

2. Procédé selon la revendication 1, **caractérisé en ce que** lesdites opérations commandées à distance sont transmises à l'aide de protocoles propres sur la bande vocale.

3. Procédé selon la revendication 1, **caractérisé en ce que** lesdites opérations commandées à distance sont sélectionnées parmi le groupe comprenant :
- la mise en attente de la personne appelante ;
- le parcage de l'appel ;
- la numérotation d'un numéro ;
- l'accès à des lignes téléphoniques extérieures ;
- la récupération d'un appel qui est en attente ou parqué ;
- la libération desdites première ou deuxième lignes téléphoniques.

4. Procédé selon l'une des revendications précédentes, **caractérisé en ce que** lesdites première et deuxième lignes téléphoniques sont du type analogique ou numérique.

5. Procédé selon la revendication 4, **caractérisé en ce que** lesdites première et deuxième lignes téléphoniques sont des lignes terrestres ou des lignes sans fil.

6. Dispositif (30) pour décentraliser des opérations d'autocommutateur de téléphone, le dispositif (30) pouvant être connecté à un autocommutateur de téléphone local classique (20), comprenant :
- des moyens pour recevoir l'appel téléphonique d'une personne appelante sur une première ligne téléphonique (73) connectant le dispositif à l'autocommutateur de téléphone local (20) vers lequel l'appel téléphonique est dirigé ;
- des moyens pour engager une deuxième ligne téléphonique (74) ;
- des moyens pour connecter lesdites première (73) et deuxième (74) lignes téléphoniques ;
- des moyens pour numéroter un numéro pré-établi sur ladite deuxième ligne téléphonique (74) ;
- des moyens pour attendre le signal de réponse d'appel sur ladite deuxième ligne téléphonique (74) de la part d'une unité de réponse (51, 52) ;
- des moyens (120, 130) pour effectuer, une fois que la connexion a été réalisée, des opérations commandées à distance transmises sur ladite deuxième ligne téléphonique (74) par ledit ensemble de réponse, comprenant l'établissement d'un appel vers un poste voulu (40), l'acheminement dudit appel d'une personne appelante vers le poste voulu (40), et dés moyens pour désengager lé dispositif (30) si l'appel de la personne appelante est accepté sur ledit poste (40).

7. Dispositif selon la revendication 6, **caractérisé en ce que** lesdits moyens pour effectuer des opérations commandées à distance sont commandés sur la bande vocale selon des protocoles propres.

8. Dispositif selon la revendication 7, **caractérisé en ce que** lesdits moyens pour effectuer des opérations commandées à distance comprennent des moyens pour :
- mettre en attente la personne appelante ;
- parquer l'appel ;
- numéroter un numéro de téléphone ;
- accéder à des lignes téléphoniques extérieures ;
- récupérer un appel mis en attente ou parqué ;
- libérer lesdites première et/ou deuxième lignes téléphoniques.

9. Dispositif selon l'une des revendications précédentes, **caractérisé en ce que** lesdites première et deuxième lignes téléphoniques sont du type analogique ou numérique.

10. Dispositif selon la revendication 9, **caractérisé en ce que** lesdites première et deuxième lignes téléphoniques sont des lignes terrestres ou des lignes sans fil.
